(19) Europäisches Patentamt

European Patent Office

Office européen des brevets

(11) **EP 0 785 022 B2**

(12) **NOUVEAU FASCICULE DE BREVET EUROPEEN**

(45) Date de publication et mention de la décision concernant l'opposition:
**21.04.2004   Bulletin 2004/17**

(51) Int Cl.$^7$: **B01J 37/20**

(45) Mention de la délivrance du brevet:
**14.06.2000   Bulletin 2000/24**

(21) Numéro de dépôt: **97400075.4**

(22) Date de dépôt: **15.01.1997**

(54) **Procédé d'incorporation de soufre dans la porosité d'un catalyseur de traitement d'hydrocarbures**

Verfahren zur Einarbeitung von Schwefel in der Porösität eines Katalysators für die Behandlung von Kohlenwasserstoffen

Process for incorporating sulphur in the porosity of a catalyst for the treatment of hydrocarbons

(84) Etats contractants désignés:
**BE DE FR GB IT LU NL**

(30) Priorité: **17.01.1996   FR 9600644**

(43) Date de publication de la demande:
**23.07.1997   Bulletin 1997/30**

(73) Titulaire: **EURECAT S.A.**
**07800 La Voulte-sur-Rhône (FR)**

(72) Inventeurs:
 • **Dufresne, Pierre**
  **26000 Valence (FR)**
 • **Brahma, Nilanjan**
  **07800 La Voulte sur Rhone (FR)**

 • **Darcissac, Jean**
  **07800 Saint Georges les Bains (FR)**
 • **Labruyere, Franck**
  **69003 Lyon (FR)**

(74) Mandataire: **Benoist, François et al**
 **Institut Français du Pétrole**
 **1 et 4, avenue de Bois-Préau**
 **92852 Rueil-Malmaison (FR)**

(56) Documents cités:
 **EP-A- 0 466 567           EP-A- 0 530 068**
 **EP-A- 0 628 347           EP-A- 0 707 890**
 **FR-A- 1 268 131           FR-A- 2 149 429**

EP 0 785 022 B2

**Description**

Il est souvent souhaitable de procéder à une sulfuration (généralement appelée "présulfuration") des métaux entrant dans la composition de certains catalyseurs de raffinage et/ou d'hydroconversion d'hydrocarbures, soit lorsque ces catalyseurs sont neufs, soit à l'issue de la régénération de ces catalyseurs avant de les réutiliser.

Une présulfuration des catalyseurs neufs ou régénérés est ainsi souhaitable pour l'emploi de ces catalyseurs dans les réactions de raffinage, par exemple les réactions d'hydrotraitement ou hydrodésulfuration ou d'hydrocraquage de diverses coupes pétrolières dont il convient, avant emploi, d'abaisser la teneur en soufre ou d'améliorer d'autres caractéristiques.

De telles réactions (hydrotraitement notamment) sont généralement effectuées en présence d'hydrogène, entre 200 et 400 °C, sous une pression comprise entre par exemple 5 et 200 bars, avec une vitesse spatiale (exprimée en $m^3$ de charge injectée liquide par $m^3$ de catalyseur et par heure) comprise entre 0, 1 et 10.

Le catalyseur utilisé pour ce type d'hydrotraitement renferme un support par exemple une alumine ou des mélanges d'alumine (brevet USP 4 334 982) ou tout autre support adéquat à base d'au moins un oxyde d'un métal ou de métalloïde, comme les magnésie, silice, silice-alumine, silice-magnésie, alumines bore, argile, charbon, alumine fluorée, ce ou ces mélanges de support pouvant au moins en partie se présenter sous forme amorphe ou sous forme cristallisée (zéolite), et le catalyseur renfermant en outre 0,2 à 30 % d'au moins un métal actif des groupes VI, VIII ou autre choisi par exemple dans le groupe constitué, par le cobalt, le molybdène, le nickel et le tungstène (USP 3 732 155 et 3 804 748). On utilise généralement un couple de deux de ces métaux, par exemple l'un des couples cobalt-molybdène, nickel-molybdène, nickel-tungstène. On peut toujours à titre d'exemple utiliser un métal noble du groupe VIII de la famille du platine : Pt, Pd... (US 4 098 682).

Ainsi, avant d'être utilisé, le catalyseur, neuf ou régénéré, est soumis généralement dans l'art antérieur, à une sulfuration (présulfuration) effectuée dans le réacteur d'hydrodésulfuration. Cette sulfuration permet d'inclure dans le catalyseur, par exemple, 50 à 110 % environ des quantités stoechiométriques de soufre calculées sur les quantités de sulfure de formule, (selon les métaux présents), $Co_9S_8$, $MoS_2$, $WS_2$ et $Ni_3S_2$.

Cette sulfuration (présulfuration) est effectuée, dans l'art antérieur, à une température voisine ou plus élevée (ainsi supérieure à 180 °C et plus particulièrement au dessus de 250 °C) par rapport à la température réactionnelle choisie pour la réaction d'hydrodésulfuration, pendant quelques heures, au moyen d'un mélange d'hydrogène sulfuré généralement dilué dans de l'hydrogène (proportion d'hydrogène sulfuré dans l'hydrogène de l'ordre de 0,5 à 5 % en volume) (USP 4,334,982). La sulfuration (ou présulfuration) proprement dite peut être effectuée par paliers de température (brevet européen EP-B-64429). On peut utiliser divers agents de sulfuration, autres que l'hydrogène sulfuré ($H_2S$) et par exemple un composé sulfuré de la famille des mercaptans, le sulfure de carbone ($CS_2$), des sulfures ou des disulfures, les composés thiophéniques et, de préférence le diméthylsulfure (DMS) et le diméthyldisulfure (DMDS) ou des polysulfures.

Par exemple pour les réactions d'hydroreformage d'hydrocarbures, le catalyseur peut renfermer, par exemple, au moins un métal de la famille du platine, c'est-à-dire un métal noble tel que platine, palladium, iridium, rhodium, ruthénium, osmium déposé sur un support adéquat (alumine, silice, silice-alumine, alumines fluorées, silices fluorées, zéolite, etc... ou des mélanges de tels supports). La teneur totale en métaux nobles est comprise par exemple entre 0,1 et 5 % en poids par rapport au catalyseur. Le catalyseur également peut renfermer généralement au moins un halogène (chlore, fluor, etc...) avec une teneur pondérale de 0 à 15 %. Eventuellement encore, le catalyseur renferme au moins un métal promoteur choisi dans les groupes les plus divers de la classification périodique des éléments.

Pour ces réactions de reformage catalytique ou de production d'hydrocarbures aromatiques, la sulfuration du catalyseur neuf ou régénéré est accompagnée d'une réduction à l'hydrogène de catalyseur et s'effectue en tête du réacteur ou au voisinage de la tête du réacteur. La température dans la zone de sulfuration est imposée par la température à laquelle s'effectue la réduction, soit généralement entre 480 et 600 °C dans la plupart des cas. La difficulté de ce type de sulfuration sur le site, c'est-à-dire au voisinage des réacteurs a entraîné des mises en oeuvre de sulfuration souvent fastidieuses quoiqu'efficaces (USP 4,172,027).

L'agent de sulfuration utilisé est dans l'art antérieur soit de l'hydrogène sulfuré pur ou dilué par de l'hydrogène (dans les conditions opératoires indiquées ci-dessus) ou par des hydrocarbures gazeux, soit encore du diméthyldisulfure dilué par de l'hydrogène, ou d'autres composés sulfurés tels que des sulfures d'alkyle ou des alkylmercaptans, dilués par de l'hydrogène.

Une sulfuration (présulfuration) d'un catalyseur neuf ou régénéré convient encore, dans certains cas, pour la sulfuration partielle ou totale de catalyseur, également à base d'un des supports déjà cités et d'au moins un des métaux actifs déjà cités, utilisables dans des réactions, de conversions d'hydrocarbures telles que les réactions d'hydrogénation, de déshydrogénation, d'alkylation, d'hydroalkylation, de déalkylation, d'hydrodéalkylation, de déalkylation à la vapeur d'eau, d'isomérisation et d'hydrodémétallisation (ou démétallation) des charges lourdes.

La sulfuration ou présulfuration, lorsqu'elle est nécessaire peut s'opérer avantageusement selon l'une ou l'autre des techniques de l'art antérieur rappelés ci-dessus.

Une autre réaction de raffinage spécialement adaptable à ces types de présulfuration est l'hydrocraquage. L'hydrocraquage (comme d'ailleurs le craquage) de coupes pétrolières lourdes est un procédé très important du raffinage, qui permet de produire, à partir de charges lourdes excédentaires et peu valorisables, les fractions plus légères telles que essences, carburéacteurs et gazoles légers que recherche le raffineur pour adapter sa production à la structure de la demande. Les charges employées en hydrocraquage sont des gas-oil, des gas-oil sous vide, des résidus désasphaltés ou hydrotraités ou équivalents.

Les catalyseurs utilisés en hydrocraquage sont tous du type bifonctionnels associant une fonction acide à une fonction hydrogénante. La fonction acide est apportée par des supports de grandes surfaces (150 à 800 $m^2.g^{-1}$ environ) présentant une acidité superficielle, tels que les alumines halogénées (chlorées ou fluorées notamment), les combinaisons d'oxydes de bore et d'aluminium, les silice-alumines amorphes et les zéolites. Les zéolites sont actuellement très appréciées. Elles sont utilisées seules ou en mélange avec une matrice amorphe. La fonction hydrogénante est apportée soit par un ou plusieurs métaux du groupe VIII de la classification périodique des éléments, tels que le nickel, le palladium ou le platine par exemple, soit par une association d'au moins deux métaux choisis parmi les groupes VI de la classification périodique, molybdène et tungstène notamment, et VIII de la même classification, cobalt et nickel notamment.

Les métaux des catalyseurs utilisés en raffinage, hydroraffinage ou en pétrochimie, qu'ils soient neufs ou régénérés, sont le plus souvent sous forme oxydée. Or, les métaux de ces catalyseurs, n'étant souvent actifs ou performants que sous forme sulfurée ou au moins partiellement sulfurée, il est donc nécessaire au raffineur ou au pétrochimiste d'opérer une sulfuration du catalyseur préalablement à sa mise en oeuvre.

Actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce qu'à permis le procédé efficace du brevet européen de la demanderesse EP-B.130850 (ou US-A-4530917) dans lequel un composé sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène. Bien entendu, l'incorporation dudit composé sulfuré peut, si on le désire, être effectuée à proximité de l'unité industrielle ou même sur le lieu de traitement de catalyseur ; le procédé d'incorporation dudit composé sulfuré peut être effectué en hors site également sur un catalyseur neuf ou régénéré, avant sa mise en oeuvre dans l'unité industrielle.

D'une façon plus précise, dans le brevet européen n° EP-B-130850 ou US A 4530917 de la demanderesse (procédé appelé SULFICAT), le procédé de sulfuration du catalyseur est donc caractérisé par une étape préliminaire dite d'incorporation dans la masse catalytique, d'un composé sulfuré de nature particulière.

L'étape préliminaire d'introduction d'un composé sulfuré, qu'arbitrairement on appelle prétraitement "hors-site" ou "ex-situ", qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrit arbitrairement "in situ") c'est-à-dire en tête des réacteurs ou dans des zones plus au moins en communication directe avec ces réacteurs, nécessitant d'opérer dans des conditions opératoires, (de température, pression ou autres), imposées au moins en partie par les conditions opératoires des réacteurs eux-mêmes ou des annexes de ces réacteurs (zone d'hydrogénation préalable du catalyseur par exemple).

En résumé, le brevet européen de la demanderesse EP-8-130850 concerne un procédé (appelé donc SULFICAT) permettant, lorsque le catalyseur sera soumis dès son démarrage, de préférence sur le site ("in situ") à la réaction classique d'activation en présence d'hydrogène, au-dessus de 100 °C, de procéder, ensuite grâce à la présence d'hydrogène sur le site, à la sulfuration au taux requis, stoechiométrique ou non stoechiométrique, du ou des métaux actifs entrant dans la composition du catalyseur. Le procédé consiste à incorporer en l'absence d'hydrogène dans la porosité du catalyseur neuf ou régénéré au moins un polysulfure organique.

La sulfuration du catalyseur peut ainsi être faite comme suit : dans une première étape réalisée "ex-situ", en l'absence d'hydrogène, on traite le catalyseur à l'aide de l'agent de sulfuration de façon à incorporer partiellement ou totalement cet agent dans la porosité du catalyseur, ledit agent de sulfuration étant utilisé en solution dans un solvant ; dans une deuxième étape, réalisée "in situ", et de préférence au-dessus de 150 °C, on procède à une étape d'activation du catalyseur effectuée en présence d'hydrogène, la quantité requise de soufre se fixant grâce à la présence d'hydrogène, sur le ou les métaux entrant dans la composition dudit catalyseur.

Cette dernière étape est perfectionnée dans le brevet EP-B-1 81 254 ou US-A-4719 195. L'objet de ces deux brevets est donc de conduire "ex situ" la présulfuration des catalyseurs en incorporant toute la quantité nécessaire de soufre et seulement la quantité nécessaire de soufre demandée par l'utilisateur. Les catalyseurs sont donc livrés à la raffinerie ou à toute autre unité, ainsi préconditionnés pour être sulfurés.

Le raffineur, ou tout autre utilisateur, n'a plus donc qu'à réactiver ce catalyseur en présence d'hydrogène à une température par exemple de 100 à 400 °C pour un catalyseur d'hydrotraitement afin de faire réagir le soufre sur les métaux contenus et démarrer ensuite la réaction de raffinage ou de conservation d'hydrocarbures par injection de la charge à traiter.

On peut citer, à titre d'exemple préféré de polysulfure, le ditertiododecylpolysulfure (TPS 32 d'ELF). On peut citer également le ditertiononylpolysulfure (TPS 37 d'ELF). Pour des raisons de procédure, on peut évidemment utiliser ces agents de sulfuration du type polysulfure seuls ou en mélange entre eux dans des proportions judicieusement choisies.

La première étape rappelée ci-dessus est effectuée en l'absence d'hydrogène et permet d'obtenir avec une grande précision le degré de sulfuration total ou partiel demandé par l'utilisateur. Cette incorporation de soufre est effectuée entre 0 et 50 °C et de préférence entre 10 et 35 °C et de préférence encore à la température ambiante. L'agent de sulfuration est utilisé, dilué dans un solvant adéquat. le solvant choisi peut être ainsi un des solvants suivants utilisés seuls ou en mélange ensemble :

- une essence légère bouillant par exemple entre environ 60 et 95 °C,
- une essence de type hexane bouillant entre 63 et 68 °C environ,
- une essence de type F bouillant entre environ 100 et 160 °C,
- une essence de type "white spirit" bouillant entre environ 150 et 250 °C,
- ou toute coupe hydrocarbonée ou non, équivalente aux essences précédentes.

Ultérieurement, sur le site ou à proximité du site (sur lequel le catalyseur sera utilisé pour le traitement de diverses charges), lors de la réaction classique d'activation, effectuée en présence d'hydrogène (deuxième étape du procédé du brevet européen EP-B-130 850), l'agent de sulfuration introduit dans le catalyseur en quantité prédéterminée, sera capable de donner naissance à de l'hydrogène sulfuré lequel, en présence d'hydrogène, conduira au sulfure ou aux sulfures désirés du ou des métaux présents dans le catalyseur selon par exemple les réactions schématiques exothermiques (1) (2) (3) suivantes pour ce qui concerne, à titre d'exemples, les sulfurations du molybdène, du cobalt et du nickel :

$$(1) \qquad MoO_3 \rightarrow MoS_2$$

$$(2) \qquad 9\,CoO \rightarrow Co_9S_8$$

$$(3) \qquad 3\,NiO \rightarrow Ni_3S_2$$

Dans EP-B-181 254 de la demanderesse (ou US-A 4719195) on a découvert que pendant une première partie de ladite deuxième étape, la présence d'hydrogène non seulement n'est pas nécessaire mais qu'au contraire, son absence est même souhaitée. La deuxième partie de la deuxième étape peut être conduite en présence d'hydrogène. Celle-ci est généralement effectuée in situ et peut donc se confondre avec le démarrage ou la mise en marche proprement dite de la réaction de raffinage ou de pétrochimie pour laquelle est conçu le catalyseur. On a constaté que dans la première partie de la deuxième étape, en dépit de l'absence d'hydrogène, le catalyseur se sulfure. Ce phénomène s'observe par l'analyse du catalyseur, lequel d'ailleurs devient noir. Par contre, des tests de chimisorption montrent que tant que le catalyseur n'atteint pas ensuite une certaine température de 275 °C et ne reste pas au moins quelques minutes à au moins 275 °C, ce catalyseur reste démuni d'activité catalytique.

Par la suite, on a perfectionné le procédé SULFICAT décrit ci-dessus après avoir découvert que les qualités des méthodes décrites dans les brevets EP-B-130 850 (US-A-4530917) et EP-B-181254 (US-A-4719195) de la demanderesse sont encore améliorées si on utilise non pas le polysulfure organique seul, mais en mélange dans des quantités critiques, avec du soufre élémentaire. L'utilisation de soufre élémentaire seul pour la présulfuration de catalyseur est décrite dans le brevet US A 3177136 (Herrington) mais les résultats obtenus sont assez décevants quoique correctes. Dans US-A-3177136, on présulfure un catalyseur au moyen de soufre élémentaire fondu vers 100-150 °C, de préférence 110-130 °C et en l'absence d'hydrogène. Le catalyseur ainsi présulfuré est alors ensuite traité en présence d'hydrogène pour transformer le soufre élémentaire en $H_2S$ entre 200 et 600 °C,

Or, curieusement, l'emploi finalement déconseillé de soufre élémentaire seul (démarrage trop rapide, encrassage, etc...) apporte une synergie dans la présulfuration hors-site quand ce soufre élémentaire est employé en mélange avec un polysulfure organique. Cette technique améliorée de la demanderesse, appelé (SUPER PLUS) est décrite dans EP-B-448435 ou US-A-5,139,983. Le soufre élémentaire est utilisé par exemple sous forme de soufre fondu, de soufre en poudre, en fleur de soufre, selon toute méthode adéquate, par exemple celle décrite dans le brevet de la demanderesse EP-B-153233.

Les procédés qui précédent ont fait l'objet d'un autre type de perfectionnement de la demanderesse décrit dans EP-B-466 568 (US-A-5153163) appelé "SURECAT" et concernant la présulfuration du catalyseur accompagnée d'une passivation. En effet, dans le domaine du raffinage et de la pétrochimie, et notamment, à titre d'exemple, dans les réactions de reformage catalytique ou d'hydrogénations sélectives des essences, il convient parfois d'atténuer l'activité des catalyseurs contenant des métaux comme par exemple le platine, le palladium, le rhénium, l'iridium, l'étain, le nickel. Ainsi on citera le cas des catalyseurs au nickel qui sont d'excellents catalyseurs par exemple d'hydrogénation des aromatiques à tel point qu'ils peuvent provoquer des emballements lors des démarrages de catalyseurs neufs, ou régénérés, avec même des incidents de démarrage et la destruction du réacteur. Il est nécessaire donc de procéder à des traitements de passivation permettant d'éviter ces emballements (run away). Ces traitements consistent généralement à empoisonner irréversiblement par du soufre les sites actifs les plus virulents du nickel qui existent sur le catalyseur neuf ou régénéré.

L'objet du perfectionnement de SURECAT permet d'améliorer les techniques de l'art antérieur et de travailler dans des conditions simplifiées et moins contraignantes pour le raffineur. Selon "SURECAT" on effectue simultanément (a) l'imprégnation du catalyseur par un composé soufre et (b) la réduction de ce catalyseur, La réduction du catalyseur en outre est réalisée à l'aide d'un composé réducteur organique, donc en l'absence d'hydrogène frais. Le composé organique réducteur est avantageusement choisi parmi les composés réducteurs décrits dans EP-B-303.525 de la demanderesse. A titre de composé préféré, on citera : l'acide formique HCOOH, le formiate de méthyle $HCOOCH_3$, le formiate d'éthyle $HCOO\,C_2\,H_5$.

Dans un autre procédé de la demanderesse, décrit dans EP-B-564 317 la présulfuration du catalyseur est effectuée soit en présence d'au moins un polysulfure organique, soit en présence de soufre élémentaire, soit à l'aide à la fois d'au moins un polysulfure organique et de soufre élémentaire. De préférence, on utilise un mélange d'au moins un polysulfure organique et de soufre élémentaire. Le solvant utilisé est généralement et de préférence un white spirit ou un solvant équivalent.

Dans les méthodes anciennes, au cours de l'étape de démarrage du catalyseur dans l'unité de la raffinerie, des effets exothermiques parfois importants étaient constatés, que la présente méthode permet d'atténuer. L'existence de réactions exothermiques dans le réacteur est supprimée ou atténuée en opérant selon ce nouveau perfectionnement lequel consiste à utiliser comme solvant non pas un white spirit utilisé seul mais un mélange adéquat d'un white spirit (ou solvant équivalent) et d'au moins un composé ou constituant contenant des liaisons carbonées de type oléfinique et notamment par exemple un type triglycéride. Ce procédé fait pénétrer le soufre dans la porosité du catalyseur, par dissolution.

Pour réaliser ce perfectionnement, on met le catalyseur en contact avec du soufre élémentaire et un liquide comprenant un agent de sulfuration compris dans le groupe des polysulfures organiques, un solvant de type white spirit ou un solvant apparenté, et un composé de type oléfinique, puis le mélange est soumis à un traitement thermique visant d'une part à éliminer le solvant, d'autre part à provoquer notamment une réaction de combinaison entre le soufre élémentaire et les doubles liaisons du composé oléfinique. Le traitement thermique s'effectue à une température supérieure à 100 °C et de préférence supérieure à 120 °C. Le soufre élémentaire est ainsi combiné partiellement ou complètement sous forme d'un polysulfure.

On notera que d'autres brevets et notamment US-A 5,215,954 concernant également la présulfuration de catalyseurs par une méthode permettant l'incorporation de soufre élémentaire dans la porosité du catalyseur ; mais ici le soufre élémentaire pénètre dans la porosité essenciellement par fusion ou par sublimation.

Par la suite, on a ultérieurement encore cherché à perfectionner les techniques de présulfuration d'un catalyseur dans le cas d'utilisation de catalyseurs adaptés à des contraintes particulières. Un procédé de présulfuration de catalyseur, appelé bi-phase "est décrit dans ET-B 628347 de la demanderesse est caractérisé par l'emploi d'un agent de présulfuration contenant (a) au moins un premier composé sulfuré du point de décomposition T1 inférieur à 220 °C et (b) au moins un deuxième composé sulfuré de point de décomposition T2 supérieur à 220 °C environ. Toutes les méthodes qui précédent ont fait encore l'objet d'un perfectionnement supplémentaire de la demanderesse, perfectionnement qui se prête à la présulfuration de la majeure partie des catalyseurs évoqués dans les pages qui précédent: Ce perfectionnement appelé TOTSUCAT, décrit dans la demande de brevet français 94/12096, consiste en un procédé comportant l'incorporation dans un catalyseur de traitement d'hydrocarbures et en partie plus ou moins grande dans la porosité de ce catalyseur d'un agent de sulfuration choisi dans le groupe constitué par exemple notamment par le soufre élémentaire et les polysulfures organiques, cette incorporation étant effectuée en présence d'un solvant qui renferme en totalité ou partie un constituant de type oléfine ou coupe oléfinique, par exemple de type huile végétale, ou un constituant similaire, le procédé comportant un traitement à l'hydrogène entre 150 et 700 °C du catalyseur, puis une étape de passivation oxydante.

La présente invention est un perfectionnement de toutes les méthodes de sulfuration ou présulfuration "insitu" ou "ex-situ" de catalyseurs utilisés notamment en raffinage/pétrochimie. L'invention est décrite dans la revendication 1. Elle concerne une méthode d'incorporation de soufre dans la porosité du catalyseur. Le soufre introduit sur le catalyseur est lié aux métaux actifs du catalyseur (molybdène, tungstène, nickel, cobalt ou autres métaux) ce qui signifie que si l'on pratique une lixiviation du catalyseur (extraction par solvant, même à haute température) la majeure partie du soufre reste dans le catalyseur. Le soufre peut être introduit sous forme d'hydrogène sulfuré dans un procédé selon l'invention en une seule étape, mais il peut également être introduit sous la forme de soufre élémentaire ou de tout autre composé du soufre. La présence d'hydrogène pur ou dilué est nécessaire dans la mise en oeuvre de l'invention, afin d'aider l'hydrogène sulfuré à pénétrer dans la masse du catalyseur ou, lorsqu'on n'utilise pas de l'hydrogène sulfuré frais mais du soufre élémentaire ou un composé soufré, à transformer le soufre élémentaire ou le composé soufré au moins en majeure partie en hydrogène sulfuré. Les composés soufrés utilisables sont tous les composés soufrés décomposables sous hydrogène en hydrogène sulfuré, tels que par exemple le soufre élémentaire, les mercaptans, sulfures, disulfures, ou des composés oxygènes du soufre ainsi que les polysulfures organiques. Le procédé est en outre caractérisé par le fait qu'il s'opère de préférence en lit mobile ou lit équivalent, et que d'autre part la sulfuration intervienne en un lieu différent de son site final d'utilisation c'est-à-dire en dehors du réacteur d'hydroconversion d'hydrocarbures (hors site ou ex-situ).

L'invention peut être réalisée par exemple entre 80 et 450° C, de préférence entre 110° et 400° C et en au moins une étape et par exemple en une seule étape. L'invention est réalisée en une étape notamment lorsque le composé soufré est l'hydrogène sulfuré. On réalise alors dans ce cas un contact entre la masse catalytique, l'hydrogène sulfuré et l'hydrogène, avec présence de vapeur d'eau éventuelle surtout si l'on opère à température relativement faible. Le procédé peut être conduit en présence d'eau. La présence de vapeur d'eau peut favoriser la qualité de la sulfuration surtout lorsqu'on opère à basse température entre 80 et 250 °C, de préférence entre 100 et 200 °C.

L'invention peut être aussi réalisée en une étape si à la place de l'hydrogène sulfuré, en introduit en mélange ou simultanément à l'hydrogène un composé sulfuré qui va immédiatement se décomposer en hydrogène sulfuré. Ce composé sulfuré est choisi dans le groupe des mercaptans, sulfures, disulfures, polysulfures, composés oxygénés du soufre. On citera par exemple le butyl mercaptan, le diméthylsulfure, le diméthyldisulfure, les butyl, octyl ou nonyl polysulfures, le dimethylsulfoxyde, le sulfolane, etc...

L'invention peut être aussi réalisée en deux étapes. Au cours de la première étape, on procède à un mélange intime entre la masse catalytique et le soufre élémentaire ou le composé de soufre (autre que l'hydrogène sulfuré) et en l'absence d'hydrogène. On peut opérer en présence éventuelle d'un solvant, tel que ceux décrits ci-dessus à propos des descriptions des techniques de l'art antérieur, white spirit notamment.

On peut éventuellement à ce stade ajouter au white spirit, une huile oléfinique ou une huile végétale. Ce contact se fait par exemple entre 10 et 320 °C, de préférence entre 80 et 250 °C et l'incorporation de soufre ou du composé sulfuré (autre que l'hydrogène sulfuré) se produit dans la porosité du catalyseur.

On peut opérer en présence de vapeur d'eau et/ou en présence d'un gas inerte. On opère de préférence en présence de gas inerte.

La deuxième étape peut éventuellement être effectuée dans la zone où s'est effectuée la première étape. Mais généralement, la deuxième étape est effectuée dans une zone distincte de celle dans laquelle s'est effectuée la première étape.

Au cours de la deuxième étape réalisée dans les gammes de température déjà indiquées, par exemple entre 80 et 450 °C et plus particulièrement entre 110 et 400 °C on met en contact la masse catalytique dans laquelle du soufre se trouve donc incorporé, avec de l'hydrogène en présence éventuelle de vapeur d'eau. A ce stade, se produit la formation d'hydrogène sulfuré puis la réaction entre les oxydes de métaux du catalyseur et l'hydrogène sulfuré naissant, c'est-à-dire, formé in-situ, réaction au cours de laquelle le soufre se lie sur le catalyseur.

Lorsqu'on utilise le procédé en deux étapes, la première étape permet d'incorporer une quantité de soufre au moins égale à la moitié du soufre correspondant à la quantité stoechiométrique des sulfures des métaux déposés à la surface du catalyseur, lesquels s'écrivent de la façon suivante :

$$MoS_2, \ WS_2, \ Ni_3S_2, \ Co_9S_8$$

Pour résumer, que l'on opère en 1 ou 2 étapes, la réaction entre le sulfure d'hydrogène et les oxydes s'écrit de la façon suivante :

$$MoO_3 + 2H_2S + H_2 \rightarrow MoS_2 + 3H_2O$$

$$WO_3 + 2H_2S + H_2 \rightarrow WS_2 + 3H_2O$$

$$3NiO + 2H_2S + H_2 \rightarrow Ni_3S_2 + 3H_2O$$

$$9CoO + 8H_2S + H_2 \rightarrow Co_9S_8 + 9H_2O$$

La méthode selon l'invention est caractérisée par le fait que le mélange hydrogène/hydrogène sulfuré, contenant éventuellement un gaz inerte, réagit directement avec les oxydes des métaux du catalyseur et que ce mélange est soit introduit directement dans le système réactionnel soit et de préférence est formé in situ par réaction entre l'hydrogène et tout composé adéquat contenant du soufre.

La formation d'hydrogène sulfuré par réaction entre l'hydrogène et ce composé soufré s'écrit différemment selon le type de composé, comme illustré ci-dessous à titre d'exemples :

- soufre élémentaire :

$$S + H_2 \rightarrow H_2S$$

- diméthyldisulfure :

$$CH_3\text{-S-S-}CH_3 + 3H_2 \rightarrow 2CH_4 + 2H_2S$$

- dioctylpolysulfure :

$$C_8H_{17}\text{-}S_5\text{-}C_8H_{17} + 6H_2 \rightarrow 2C_8H_{18} + 5H_2S$$

- diméthylsulfoxyde :

$$CH_3\text{-SO-}CH_3 + 3H_2 \rightarrow 2CH_4 + H_2S + H_2O$$

A l'issue de la réaction en 1 ou 2 étapes, le catalyseur est purgé sous gaz inerte pour évacuer au moins en partie l'hydrogène et surtout généralement au moins en partie l'hydrogène sulfuré de sa porosité. Généralement, il convient d'évacuer sensiblement la totalité de l'hydrogène et de l'hydrogène sulfuré résiduels.

Un des aspects de l'invention est que la sulfuration du catalyseur soit réalisée en "hors-site", c'est-à-dire en un lieu qui soit distinct du lieu d'utilisation du catalyseur pour sa fonction de conversion ou d'hydroconversion de charges pétrolières. Cette particularité apporte beaucoup d'avantages, notamment parce que le catalyseur chargé dans l'unité contient déjà la quantité de soufre nécessaire, mais aussi qu'il est déjà activé par ailleurs, donc déjà prêt à être utilisé en tant que catalyseur actif. Cette particularité fait gagner un temps précieux à l'utilisateur de l'unité catalytique en raffinerie car simplifie considérablement la procédure de démarrage.

Un autre aspect de l'invention est que, contrairement aux techniques de l'art antérieur, cette sulfuration intervienne sur un catalyseur en mouvement dans la zone d'incorporation de soufre. Les réactions d'activation interviennent ainsi alors que le catalyseur est en mouvement.

On peut utiliser par exemple un lit de type croulant où le solide descend lentement par gravité le long dun tube ou d'une couronne, un lit fluidisé où le solide est soulevé par un flux de gaz de haut débit, un lit mobile ou un lit où le catalyseur circule soit dans un four à bandes soit dans un four rotatif. Le lit peut éventuellement être expansé ou bouillonnant.

Sans préjuger de théories scientifiques plus élaborées, cette mobilité du catalyseur pendant la phase de formation des espèces sulfures lui assure un traitement homogène et ainsi une grande qualité.

Le problème potentiel en effet des lits fixes est l'existence de chemins préférentiels qui a pour conséquence la création de zones où le catalyseur aura vu des quantités de soufre insuffisantes par rapport à la stoechiométrie nécessaire. Un autre problème potentiel des lits fixes est aussi la difficulté relative d'évacuer les calories formées par les réactions exothermiques de sulfuration. Le brassage continu du catalyseur est intéressant à ces deux titres. Ainsi, on opère avec un lit catalytique en mouvement, que le procédé soit effectué en seule étape ou en deux étapes. Lorsque le procédé est effectué en deux étapes et alors de préférence dans deux zones distinctes, on opère avec un catalyseur en mouvement dans chacune des deux lits de ces deux étapes.

Une variante particulière du procédé consiste à transporter, dans une première étape, les particules de catalyseur dans un four chauffé, de préférence un four tournant, où la température des particules est portée au-dessus de 120° C et par exemple entre 120° et 200° C. Ensuite les particules de catalyseur sont mises en contact, par exemple par atomisation, avec du soufre élémentnaire fondu dont la température est entre 120° et 160° C.

Dans une seconde étape, effectuée dans le même four ou un autre four (tournant par exemple), les particules imprégnées de soufre élémentaire fondu sont mises au contact d'hydrogène ou d'un gaz contenant de l'hydrogène à une température d'environ 80° à 450° C, de préférence 110° à 400° C, et plus particulièrement 250 ° à 400° C. Il est évident pour l'homme de l'art qu'entre la première et la deuxième étape, il est préférable que la température des particules catalytiques ne baisse pas. Après l'étape d'hydrogénation, les particules catalytiques sont enlevées du fourpuis sont refroidies.

Les exemples ci-après illustrent l'invention.

Exemple 1 :

Catalyseur présulfuré par un mélange $H_2S/H_2O/H_2$. On opère en une seule étape. Un catalyseur commercial type CoMo sur alumine (le HR 306 de la Société PROCATALYSE) est traité par un mélange $H_2S/H_2O/H_2$ contenant 15 % d'$H_2S$, 15 % $H_2O$ et 70 % $H_2$ en volume. L'eau est injectée dans le circuit gazeux au moyen d'une pompe liquide. Le réacteur est un système continu rotatif pour lequel le temps de séjour à la température indiquée est d'environ 80 minutés. Dans cet exemple, la température est de 110 °C. Le refroidissement s'effectue sous hydrogène puis sous azote. On obtient ainsi le catalyseur A. La teneur en soufre est analysée sur le catalyseur A tel quel ainsi que sur le solide préalablement lavé au toluène chaud dans un soxhlet. Le taux de sulfuration est évalué par le taux de molybdène de valence 4 comparé au molybdène de valence 6 au moyen de la technique de spectroscopie de photoélectrons X. Le molybdène $4^+$ correspond aux espèces sulfures apparentées à $MoS_2$, alors que le molybdène $6^+$ correspond aux espèces oxydes préexistant sur le catalyseur frais. Les résultats sont portés au tableau 1.

Exemple 2 :

Le catalyseur B est obtenu de façon identique à celui de l'exemple 1 si ce n'est que la température est de 300 °C au lieu de 110 °C.

Exemple 3 :

Le catalyseur C est obtenu comme précédemment dans l'exemple 1 à 110 °C, mais le mélange gazeux ne contient pas d'$H_2O$ qui est remplacé par un débit de gaz inerte. La composition gazeuse est la suivante 15 % $H_2S$, 15 % $N_2$, 70 % $H_2$.

En conclusion de ces trois premiers essais effectués en présence d'hydrogène sulfuré frais, il apparaît que la température de 110 °C est suffisante pour commencer une sulfuration notable du catalyseur et qu'il est préférable que le gaz contienne une certaine pression partielle de vapeur d'eau. Dans le cas contraire, les taux de sulfuration indiqués par les niveaux stoechiométrique ou les rapports $Mo^{4+}/Mo^{6+}$ peuvent apparaître insuffisants. Néanmoins, la température de 300 °C permet d'atteindre des taux de sulfuration beaucoup plus élevés (comme le montre l'exemple 8).

Exemple 4 :

Cet exemple est conforme à l'invention et identique à l'exemple 2 si ce n'est que l'on opère en l'absence de vapeur d'eau ; l'atmosphère de traitement est un mélange $H_2/H_2S$ à 15 % $H_2S$ et 85 % $H_2$, encore dans un four rotatif à 300 °C. La quantité de sulfure d'hydrogène mis en oeuvre correspond à 1,5 fois la quantité théoriquement nécessaire à réaliser $MOS_2/Co_9S_8$. Après refroidissement sous hydrogène et purge sous azote, on obtient le catalyseur H, (qui s'avère mieux présulfuré qu'à l'exemple comparable n° 3 où la température utilisée n'était que 110 °C).

Exemple 5 :

Dans ce cas, c'est de l'hydrogène pur qui est utilisé. Le sulfure d'hydrogène gazeux est remplacé par une injection dans le circuit d'hydrogène de diméthyldisulfure. La quantité de soufre injectée sous forme de DMDS correspond à 1,5 fois la quantité stoechiométrique $MOS_2/Co_9S_8$. Le temps de séjour à 300 °C est de 80 minutes comme à l'exemple précédent. Après refroidissement sous hydrogène et purge sous azote, on obtient le catalyseur 1.

Exemple 6 :

Les catalyseurs de type H, I ainsi que le catalyseur frais CoMo de référence (HR306 de Procatalyse) sont chargés tour à tour dans une unité de test catalytique. Les trois catalyseurs seront testés en hydrodésulfuration de gas oil atmosphérique dans les conditions suivantes : Pression : 60 b, température : 340 °C, vitesse volumique horaire :

2 h$^{-1}$, avec une charge de propriétés suivantes : teneur en soufre : 1,23 % pds point initial 225, point final : 392 °C.

La procédure de démarrage diffère pour les 3 catalyseurs, les 2 premiers étant déjà présulfurés activés, le troisième étant encore oxyde. Le damier va en effet être soumis à la procédure suivante pour le transformer en catalyseur J : la montée en température s'effectue sous hydrogène à 5 °C/minute jusqu'à 220 °C où un pallier d'une heure est observé.

Le circuit d'injection de diméthyldisulfure est actionné pour ajouter, au début du palier, une quantité de 1,6 g de S par heure via une solution de DMDS diluée à 10 % dans du naphta. Après 1 h de palier, la vitesse d'injection est réduite à 1,2 g de S par heure, la vitesse de montée en température est reprise à 1 °C/minute à jusqu'à 300 °C où un palier de 80 minutes est observé. L'injection de DMDS est alors stoppée. C'est alors la fin de la procédure d'activation pour le catalyseur J, la quantité de DMDS correspondant à 1,5 fois la quantité stoechiométrique de soufre.

On baisse ensuite la température à 200 °C, on injecte le gas oil atmosphérique et on remonte la température à 2 °C/minute jusqu'à 340 °C. La performance d'hydrodésulfuration est mesurée après 12 heures de stabilisation.

Dans le cas des cas des catalyseurs H et L, la procédure ne comporte pas de sulfuration, simplement une montée en température à 5° C/minute jusqu'à 200 °C, l'injection du gas oil à 200 °C et la montée à 2 °C/minute jusqu'à 340 °C où le taux d'HDS est mesuré après 12 heures. Les résultats sont portés à la dernière ligne du tableau 1, montrant un très net avantage aux deux produits présulfurés en dehors de l'unité de test et dans un lit en mouvement, par rapport au catalyseur présulfuré en lit fixe.

TABLEAU 1:

| Exemple | 1 | 2 | 3 | 4 | 5 | 6 |
|---|---|---|---|---|---|---|
| **Catalyseur** | A | B | C | H | I | J |
| Agent sulfurant initial* | $H_2S$ | $H_2S$ | $H_2S$ | $H_2S$ | DMDS | DMDS |
| Nombre d'étapes | 1 | 1 | 1 | 1 | 1 | 1 |
| Lit en mouvement (m), fixe (f) | m | m | m | m | m | f |
| $H_2O$ | + | + | - | - | - | - |
| $H_2$ | + | + | + | + | + | + |
| Température (°C) | 110 | 300 | 110 | 300 | 300 | 300 |
| Stoechiométrie sur brut (%) | 76 | 97 | 68 | 99 | 92 | / |
| Stoechiométrie sur lixivié (%) | 62 | 92 | 55 | 92 | 90 | / |
| $\dfrac{Mo^{4+}}{Mo^{4+} + Mo^{6+}}$ | 70 | > 80 | 60 | > 80 | > 80 | / |
| Taux de désulfuration (%) | | | | 94,1 | 93,4 | 92,0 |

\* $H_2S$ : sulfure d'hydrogène
\* ES : soutre élémentaire
\* PS : polysulfure type TNPS
\* DMDS : Diméthyldisulfure
Les + et - indiquent la présence ou l'absence du composé gazeux.

**Revendications**

1. Procédé d'incorporation de soufre dans la porosité d'un catalyseur de conversion d'hydrocarbures renfermant au moins un métal des groupes VI ou VIII de la classification périodique des éléments, ledit procédé étant **caractérisé en ce que** le catalyseur est utilisé sous la forme d'un lit catalytique dans la zone d'incorporation de soufre, lit dans lequel le catalyseur est en mouvement, le procédé étant en outre effectué hors-site et en présence d'hydrogène, soit en présence d'hydrogène sulfuré, soit en présence d'un composé sulfuré capable de se décomposer, en présence d'hydrogène, en hydrogène sulfuré, le procédé étant réalisé soit en une seule étape à une température comprise entre 80 et 450°C, ou soit en deux étapes, la première étape consistant à mélanger du soufre élémentaire et/ou un composé de soufre, autre que l'hydrogène sulfuré, en l'absence d'hydrogène, la deuxième étape consistant à mettre en contact la masse catalytique, dans laquelle du soufre s'y est trouvé incorporé au cours de la première étape, avec de l'hydrogène en vue de provoquer d'abord la formation d'hydrogène sulfuré puis la réaction entre les oxydes de métaux du catalyseur et l'hydrogène sulfuré naissant, procédé dans lequel le lit catalytique de première étape est en mouvement, et le lit catalytique de deuxième étape est en mouvement.

**2.** Procédé selon la revendication 1 effectué en au moins une étape en présence d'hydrogène sulfuré.

**3.** Procédé selon la revendication 1 ou 2 effectué entre 80 et 450° C, de préférence entre 110 et 400°C.

**4.** Procédé selon la revendication 3 effectué en phase gazeuse en présence de vapeur d'eau.

**5.** Procédé selon l'une des revendications 1 à 3 effectué en l'absence de vapeur d'eau à une température supérieure à 250°C.

**6.** Procédé selon la revendication 1 dans lequel le lit catalytique est choisi dans le groupe constitué par les lits mobile, circulant, fluidisé, expansé, bouillonnant, ou de type à bandes ou rotatif.

**7.** Procédé selon la revendication 1 dans lequel ledit composé sulfuré est choisi dans le groupe constitué par le soufre élémentaire, les mercaptans, les sulfures, les disulfures, les polysulfures et les composés oxygénés du soufre.

**8.** Procédé selon la revendication 7 dans lequel ledit composé sulfuré est choisi parmi le butyl mercaptan, le diméthyl sulfure, le diméthyl disulfure, les butyl, octyl et nonyl polysulfures, le dimethylsulfoxyde et le sulfolane.

**9.** Procédé selon la revendication 1 réalisé en deux étapes et dans lequel la première étape est effectuée en présence de vapeur d'eau.

**10.** Procédé selon l'une des revendications 1 et 9 en deux étapes, dans lequel la première étape est effectuée en présence de gaz inerte.

**11.** Procédé selon l'une des revendications 1 et 10 en deux étapes, dans lequel au cours de la première étape on opère en présence d'un solvant.

**12.** Procédé selon l'une des revendications 1 à 11 en deux étapes, dans lequel on opère, au cours de la première étape, entre 10 et 320°C, de préférence entre 80 et 250°C.

**13.** Procédé selon la revendication 1 en deux étapes dans lequel la deuxième étape est effectuée dans la zone dans laquelle s'est déroulée la première étape.

**14.** Procédé selon la revendication 1 en deux étapes, dans lequel la deuxième étape est effectuée dans une zone distincte de celle dans laquelle s'est déroulée la première étape.

**15.** Procédé selon l'une des revendications 13 ou 14 dans laquelle la température de deuxième étape est comprise entre 80 et 450°C, de préférence entre 110 et 400°C.

**16.** Procédé selon la revendication 15 dans lequel, au cours de la deuxième étape, on opère en présence de vapeur d'eau.

**17.** Procédé selon l'une des revendications 1 à 16 en deux étapes, dans lequel on incorpore au cours de la première étape une quantité de soufre au moins égale à la moitié du soufre correspondant à la quantité stoechiométrique des sulfures des métaux déposés à la surface du catalyseur.

**18.** Procédé selon l'une des revendications 1 à 17 dans lequel, à l'issue du procédé, le catalyseur est purgé, sous gaz inerte pour évacuer au moins en partie l'hydrogène sulfuré résiduel.

**19.** Procédé selon la revendication 18 dans lequel sensiblement la totalité de l'hydrogène et de l'hydrogène sulfuré est évacuée.

**20.** Procédé selon la revendication 11 dans lequel le solvant est de préférence un white spirit auquel on ajoute une huile oléfinique ou une huile végétale.

**21.** Procédé selon la revendication 11 dans lequel le solvant est un composé oléfinique.

22. Procédé selon l'une des revendications 1 à 8, **caractérisé en ce qu'**il est réalisé hors-site en une étape en présence d'hydrogène et un composé sulfuré.

**Patentansprüche**

1. Verfahren zur Aufnahme von Schwefel in die Porosität eines Katalysators zur Konversion von Kohlenwasserstoffen, der wenigstens ein Metall der Gruppe VI oder VIII des Periodensystems der Elemente umfasst, wobei das Verfahren **dadurch gekennzeichnet ist, dass** der Katalysator in der Form eines katalytischen Betts in der Schwefeleinbauzone verwendet wird, in dem der Katalysator sich in Bewegung befindet, wobei sich das Verfahren im übrigen ex situ und in Gegenwart von Wasserstoff, entweder in Gegenwart von Schwefelwasserstoff, oder in Gegenwart einer schwefelhaltigen Verbindung, die in der Lage ist, sich in Anwesenheit von Wasserstoff zu Schwefelwasserstoff zu zersetzen, wobei das Verfahren entweder in einer Stufe bei einer Temperatur zwischen 80 und 450°C durchgeführt wird oder in zwei Stufen durchgeführt wird, wobei die erste Stufe darin besteht, dass elementarer Schwefel und/oder eine Schwefelverbindung, außer Schwefelwasserstoff, in Abwesenheit von Wasserstoff vermischt werden, wobei die zweite Stufe darin besteht, die katalytische Masse, in der Schwefel eingebaut sich während der ersten Stufe befand, mit Wasserstoff zu kontaktieren, um zunächst die Bildung von Schwefelwasserstoff, dann die Reaktion zwischen den Metalloxiden des Katalysators und dem naszierenden Schwefelwasserstoff hervorzurufen, Verfahren, bei dem sich das katalytische Bett der ersten Stufe in Bewegung befindet und bei dem sich das katalytische Bett der zweiten Stufe in Bewegung befindet.

2. Verfahren nach Anspruch 1, durchgeführt in wenigstens einer Stufe in Gegenwart von Schwefelwasserstoff.

3. Verfahren nach einem der Ansprüche 1 oder 2, durchgeführt zwischen 80 und 450°C, bevorzugt zwischen 110 und 200°C.

4. Verfahren nach Anspruch 3, durchgeführt in Gasphase in Anwesenheit von Wasserdampf.

5. Verfahren nach einem der Ansprüche 1 bis 3, durchgeführt in Abwesenheit von Wasserdampf bei einer Temperatur oberhalb von 250°C.

6. Verfahren nach Anspruch 1, bei dem das katalytische Bett gewählt ist aus der Gruppe, die gebildet wird durch die beweglichen, zirkulierenden, fluidisierten, expandierten, siedende Betten oder solche vom Typ mit Bändern oder durch die rotierenden Betten.

7. Verfahren nach Anspruch 1, bei dem diese sulfidische Verbindung gewählt ist aus der Gruppe, die gebildet wird durch elementaren Schwefel, die Mercaptane, die Sulfide, die Disulfide, die Polysulfide und die sauerstoffhaltigen Verbindungen des Schwefels.

8. Verfahren nach Anspruch 7, bei dem diese sulfidische Verbindung gewählt ist aus Butylmercaptan, Dimethylsulfid, Dimethyldisulfid, den Butyl-, Octylund Nonylpolysulfiden, dem Dimethylsulfoxid und dem Sulfolan.

9. Verfahren nach Anspruch 1, ausgeführt in zwei Stufen, bei dem die erste Stufe in Anwesenheit von Wasserdampf durchgeführt wird.

10. Verfahren nach einem der Ansprüche 1 und 9, in zwei Stufen, bei dem die erste Stufe in Gegenwart von Inertgas durchgeführt wird.

11. Verfahren nach einem der Ansprüche 1 und 10, in zwei Stufen, bei dem man während der ersten Stufe in Gegenwart eines Lösungsmittels arbeitet.

12. Verfahren nach einem der Ansprüche 1 bis 11, in zwei Stufen, bei dem während der ersten Stufe zwischen 10 und 320°C, bevorzugt zwischen 80 und 250°C gearbeitet wird.

13. Verfahren nach Anspruch 1, in zwei Stufen, bei dem die zweite Stufe in der Zone durchgeführt wird, in der die erste Stufe abgelaufen ist.

14. Verfahren nach Anspruch 1, in zwei Stufen, bei dem die zweite Stufe in einer Zone unterschiedlich zu der, in der die erste Stufe abgelaufen ist, durchgeführt wird.

15. Verfahren nach einem der Ansprüche 13 oder 14, bei dem die Temperatur der zweiten Stufe zwischen 80 und 450°C, bevorzugt zwischen 110 und 400°C liegt.

16. Verfahren nach Anspruch 15, bei dem man während der zweiten Stufe in Anwesenheit von Wasserdampf arbeitet.

17. Verfahren nach einem der Ansprüche 1 bis 16, in zwei Stufen, bei dem man im Verlauf der ersten Stufe eine Schwefelmenge aufnimmt, wenigstens gleich der Hälfte des Schwefels, der der stöchiometrischen Menge der auf der Oberfläche des Katalysators niedergeschlagenen Metallsulfide entspricht.

18. Verfahren nach einem der Ansprüche 1 bis 17, bei dem am Ende des Verfahrens der Katalysator mit Inertgas gespült wird, um wenigstens einen Teil des Rest-Schwefelwasserstoffs zu entfernen.

19. Verfahren nach Anspruch 18, bei dem im wesentlichen die Gesamtheit des Wasserstoffs und des Schwefelwasserstoffs evakuiert wird.

20. Verfahren nach Anspruch 11, bei dem das Lösungsmittel vorzugsweise ein Testbenzin ist, in das man ein olefinisches Öl oder ein pflanzliches Öl mischt.

21. Verfahren nach Anspruch 11, bei dem das Lösungsmittel eine olefinische Verbindung ist.

22. Verfahren nach einem der Ansprüche 1 bis 8, **dadurch gekennzeichnet, dass** es ex-situ durchgeführt wird, ein einer Stufe in Gegenwart von Wasserstoff und einer schwefelhaltigen Verbindung.


## Claims

1. A process for incorporating sulfur into the pores of a hydrocarbon conversion catalyst containing at least one metal from groups VI or VIII of the periodic table of elements, said process being **characterised in that** the catalyst is used in the form of a catalytic bed in the zone in which sulfur is incorporated, in which bed the catalyst is in motion, the process being further carried out off-site in the presence of hydrogen, either in the presence of sulfurated hydrogen, or in the presence of a sulfurated compound capable of decomposition in the presence of hydrogen into sulfurated hydrogen, the process being carried out either in one single stage at a temperature of between 80 and 450°C, or in two stages, the first stage consisting in mixing elementary sulfur and/or a sulfur compound, other than sulfurated hydrogen, in the absence of hydrogen, the second stage consisting in contacting the catalytic mass, in which the sulfur is found incorporated during the first stage, with hydrogen for the purpose of causing firstly the formation of sulfurated hydrogen and then the reaction between the metal oxides of the catalyst and the nascent sulfurated hydrogen, in which process the catalytic bed of the first stage is in motion, and the catalytic bed of the second stage is in motion.

2. A process according to Claim 1 which is carried out in at least one stage in the presence of sulfurated hydrogen.

3. A process according to Claim 1 or Claim 2 which is carried out between 80 and 450°C, preferably between 110 and 400°C.

4. A process according to Claim 3 which is carried out in gas phase in the presence of water vapor.

5. A process according to one of Claims 1 to 3 which is carried out in the absence of water vapor at a temperature of greater than 250°C.

6. A process according to Claim 1 in which the catalytic bed is selected from the group constituted by moving beds, circulating beds, fluidised beds, expanded beds, ebullating beds, or beds such as belt beds or rotary beds.

7. A process according to Claim 1 in which said sulfurated compound is selected from the group constituted by elementary sulfur, mercaptans, sulfides, disulfides, polysulfides and oxidized sulfur compounds.

8. A process according to Claim 7 in which said sulfurated compound is selected from among butyl mercaptan, dimethyl sulfide, dimethyl disulfide, butyl, octyl and nonyl polysulfides, dimethyl sulfoxide and sulfolane.

9. A process according to Claim 1 which is carried out in two stages, and wherein the first stage is carried out in the presence of water vapor.

10. A process according to one of Claims 1 and 9 in two stages, wherein the first stage is carried out in the presence of inert gas.

11. A process according to one of Claims 1 and 10 in two stages, wherein during the first stage the operation is carried out in the presence of a solvent.

12. A process according to one of Claims 1 to 11 in two stages, wherein during the first stage the operation is carried out at between 10 and 320°C, preferably at between 80 and 250°C.

13. A process according to Claim 1 in two stages, wherein the second stage is carried out in the zone in which the first stage took place.

14. A process according to Claim 1 in two stages, wherein the second stage is carried out in a separate zone from that in which the first stage took place.

15. A process according to one of Claims 13 or 14 in which the temperature of the second stage is between 80 and 450°C, preferably between 110 and 400°C.

16. A process according to Claim 15, wherein during the second stage the operation is carried out in the presence of water vapor.

17. A process according to one of Claims 1 to 16 in two stages, wherein during the first stage, an amount of sulfur is incorporated which is at least equal to half the sulfur corresponding to the stoichiometric amount of the sulfides of the metals deposited on the surface of the catalyst.

18. A process according to one of Claims 1 to 17, wherein, at the end of the process, the catalyst is purged, under inert gas, in order to evacuate at least part of the residual sulfurated hydrogen.

19. A process according to Claim 18, wherein substantially all of the hydrogen and sulfurated hydrogen is evacuated.

20. A process according to Claim 11, wherein the solvent is preferably a white spirit to which an olefinic oil or a vegetable oil is added.

21. A process according to Claim 11, wherein the solvent is an olefinic compound.

22. A process according to one of the Claims 1 and 8, **characterised in that** it is carried out off-site in one stage in the presence of hydrogen and a sulfurated compound.